# EUROPEAN PATENT APPLICATION

(11) **EP 4 672 823 A2**
(43) Date of publication of application: **31.12.2025**
(21) Application number: 25202570.5
(22) Date of filing: 09.01.2024
(51) Int. Cl.: H04W 48/12

(54) **ALLOCATION OF CORESET 0 FOR NEW RADIO**

(30) Priority: 16.02.2023 US 202363446137 P
(62) Divisional of application: 24150866.2
(71) Applicant: Nokia Technologies Oy, 02610 Espoo (FI)
(72) Inventor: TIIROLA, Esa Tapani, Oulu (FI); HAKOLA, Sami-Jukka, Kempele (FI); HOOLI, Kari Juhani, Oulu (FI); HUGL, Klaus, Vienna (AT); LUNTTILA, Timo Erkki, Espoo (FI)
(74) Representative: Molnia, David

(57) **Abstract**

Systems, methods, apparatuses, and computer program products for allocation of CORESET#0 for new radio (NR). A method may include determining a control resource set zero configuration table to be applicable based on a synchronization raster of a narrowband new radio where a synchronization signal block has been detected; receiving a physical broadcast channel according to a puncturing assumption; obtaining, from a master information block indicated in the received physical broadcast channel, a row index pointing into the control resource set zero configuration table; determining information related to at least one of information of punctured or non-punctured resource blocks, or interleaving information, based on the row index; and using the determined information to determine the control resource set zero for the narrowband new radio.

## Description

### FIELD:

Some example embodiments may generally relate to mobile or wireless telecommunication systems, such as Long Term Evolution (LTE) or fifth generation (5G) new radio (NR) access technology, or 5G beyond, or other communications systems. For example, certain example embodiments may relate to apparatuses, systems, and/or methods for allocation of control resource set zero (CORESET#0) for new radio (NR).

### BACKGROUND:

Examples of mobile or wireless telecommunication systems may include the Universal Mobile Telecommunications System (UMTS) Terrestrial Radio Access Network (UTRAN), LTE Evolved UTRAN (E-UTRAN), LTE-Advanced (LTE-A), MulteFire, LTE-A Pro, fifth generation (5G) radio access technology or NR access technology, and/or 5G-Advanced. 5G wireless systems refer to the next generation (NG) of radio systems and network architecture. 5G network technology is mostly based on NR technology, but the 5G (or NG) network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the IoT.

### SUMMARY:

Some example embodiments may be directed to a method. The method may include determining a control resource set zero configuration table to be applicable based on a synchronization raster of a narrowband new radio where a synchronization signal block has been detected; receiving a physical broadcast channel according to a puncturing assumption; obtaining, from a master information block indicated in the received physical broadcast channel, a row index pointing into the control resource set zero configuration table; determining information related to at least one of information of punctured or non-punctured resource blocks, or interleaving information, based on the row index; and using the determined information to determine the control resource set zero for the narrowband new radio.

Other example embodiments may be directed to an apparatus. The apparatus may include at least one processor and at least one memory storing instructions that, when executed by the at least one processor, cause the apparatus at least to determine a control resource set zero configuration table to be applicable based on a synchronization raster of a narrowband new radio where a synchronization signal block has been detected; receive a physical broadcast channel according to a puncturing assumption; obtain, from a master information block indicated in the received physical broadcast channel, a row index pointing into the control resource set zero configuration table; determine information related to at least one of information of punctured or non-punctured resource blocks, or interleaving information, based on the row index; and use the determined information to determine the control resource set zero for the narrowband new radio.

Other example embodiments may be directed to an apparatus. The apparatus may include means for determining a control resource set zero configuration table to be applicable based on a synchronization raster of a narrowband new radio where a synchronization signal block has been detected; means for receiving a physical broadcast channel according to a puncturing assumption; means for obtaining, from a master information block indicated in the received physical broadcast channel, a row index pointing into the control resource set zero configuration table; means for determining information related to at least one of information of punctured or non-punctured resource blocks, or interleaving information, based on the row index; and means for using the determined information to determine the control resource set zero for the narrowband new radio.

In accordance with other example embodiments, a non-transitory computer readable medium may be encoded with instructions that may, when executed in hardware, perform a method. The method may include determining a control resource set zero configuration table to be applicable based on a synchronization raster of a narrowband new radio where a synchronization signal block has been detected; receiving a physical broadcast channel according to a puncturing assumption; obtaining, from a master information block indicated in the received physical broadcast channel, a row index pointing into the control resource set zero configuration table; determining information related to at least one of information of punctured or non-punctured resource blocks, or interleaving information, based on the row index; and using the determined information to determine the control resource set zero for the narrowband new radio.

Other example embodiments may be directed to a computer program product that performs a method. The method may include determining a control resource set zero configuration table to be applicable based on a synchronization raster of a narrowband new radio where a synchronization signal block has been detected; receiving a physical broadcast channel according to a puncturing assumption; obtaining, from a master information block indicated in the received physical broadcast channel, a row index pointing into the control resource set zero configuration table; determining information related to at least one of information of punctured or non-punctured resource blocks, or interleaving information, based on the row index; and using the determined information to determine the control resource set zero for the narrowband new radio.

Other example embodiments may be directed to an apparatus that may include circuitry configured to determine a control resource set zero configuration table to be applicable based on a synchronization raster of a narrowband new radio where a synchronization signal block has been detected; receive a physical broadcast channel according to a puncturing assumption; obtain, from a master information block indicated in the received physical broadcast channel, a row index pointing into the control resource set zero configuration table; determine information related to at least one of information of punctured or non-punctured resource blocks, or interleaving information, based on the row index; and use the determined information to determine the control resource set zero for the narrowband new radio.

Some example embodiments may be directed to a method. The method may include transmitting a synchronization signal block on a synchronization raster of a narrowband new radio; and transmitting a physical broadcast channel according to a puncturing assumption, wherein a row index pointing into a control resource set zero configuration table is carried in a master information block indicated in the physical broadcast channel, and the row index is related to at least one of information of punctured or non-punctured resource blocks, or interleaving information.

Other example embodiments may be directed to an apparatus. The apparatus may include at least one processor and at least one memory storing instructions that, when executed by the at least one processor, cause the apparatus at least to transmit a synchronization signal block on a synchronization raster of a narrowband new radio; and transmit a physical broadcast channel according to a puncturing assumption, wherein a row index pointing into a control resource set zero configuration table is carried in a master information block indicated in the physical broadcast channel, and the row index is related to at least one of information of punctured or non-punctured resource blocks, or interleaving information.

Other example embodiments may be directed to an apparatus. The apparatus may include means for transmitting a synchronization signal block on a synchronization raster of a narrowband new radio; and means for transmitting a physical broadcast channel according to a puncturing assumption, wherein a row index pointing into a control resource set zero configuration table is carried in a master information block indicated in the physical broadcast channel, and the row index is related to at least one of information of punctured or non-punctured resource blocks, or interleaving information.

In accordance with other example embodiments, a non-transitory computer readable medium may be encoded with instructions that may, when executed in hardware, perform a method. The method may include transmitting a synchronization signal block on a synchronization raster of a narrowband new radio; and transmitting a physical broadcast channel according to a puncturing assumption, wherein a row index pointing into a control resource set zero configuration table is carried in a master information block indicated in the physical broadcast channel, and the row index is related to at least one of information of punctured or non-punctured resource blocks, or interleaving information.

Other example embodiments may be directed to a computer program product that performs a method. The method may include transmitting a synchronization signal block on a synchronization raster of a narrowband new radio; and transmitting a physical broadcast channel according to a puncturing assumption, wherein a row index pointing into a control resource set zero configuration table is carried in a master information block indicated in the physical broadcast channel, and the row index is related to at least one of information of punctured or non-punctured resource blocks, or interleaving information.

Other example embodiments may be directed to an apparatus that may include circuitry configured to transmit a synchronization signal block on a synchronization raster of a narrowband new radio; and transmit a physical broadcast channel according to a puncturing assumption, wherein a row index pointing into a control resource set zero configuration table is carried in a master information block indicated in the physical broadcast channel, and the row index is related to at least one of information of punctured or non-punctured resource blocks, or interleaving information.

### BRIEF DESCRIPTION OF THE DRAWINGS:

For proper understanding of example embodiments, reference should be made to the accompanying drawings, wherein:
FIG. 1 illustrates an example deployment scenario.
FIG. 2 illustrates an example of a NR initial access signals and channels with 15 kHz subcarrier spacing (SCS) for channel bandwidth ≥ 5MHz.
FIG. 3 illustrates example of synch raster points below 3 GHz.
FIG. 4 illustrates an example of demodulated reference signal (DMRS) allocation in physical broadcast channel (PBCH) physical resource block (PRB) with four different frequency domain shifts as a function of physical cell ID.
FIG. 5 illustrates an example set of predefined parameters for control resource set zero (CORESET#0).
FIG. 6(a) illustrates an example set of resource blocks (RBs) and slot symbols of CORESET.
FIG. 6(b) illustrates an NB NR scenario with multiplexing Pattern 1.
FIG. 7 illustrates a table of different channel bandwidth (BW), synchronization signal and physical broadcast channel (PBCH) block (SSB) transmission BW, and synchronization raster dependencies.
FIG. 8 illustrates a new CORESET#0 configuration table, according to certain example embodiments.
FIG. 9 illustrates an example entry of CORESET#0 configuration table of FIG. 8, according to certain example embodiments.
FIG. 10 illustrates another new CORESET#0 configuration table, according to certain example embodiments.
FIG. 11 illustrates an interleaved and non-interleaved CCE-to-REG mapping, according to certain example embodiments.
FIG. 12 illustrates a modified CORESET#0 configuration table, according to certain example embodiments.
FIG. 13(a) illustrates a first new CORESET#0 configuration table, according to certain example embodiments when multiple configuration tables are configured.
FIG. 13(b) illustrates a second new CORESET#0 configuration table, according to certain example embodiments when multiple configuration tables are configured.
FIG. 14 illustrates an example flow diagram of a method, according to certain example embodiments.
FIG. 15 illustrates an example flow diagram of another method, according to certain example embodiments.
FIG. 16 illustrates a set of apparatuses, according to certain example embodiments.

### DETAILED DESCRIPTION:

It will be readily understood that the components of certain example embodiments, as generally described and illustrated in the figures herein, may be arranged and designed in a wide variety of different configurations. The following is a detailed description of some example embodiments of systems, methods, apparatuses, and computer program products for allocation of CORESET#0 for NR. For instance, certain example embodiments may be directed to allocation of CORESET#0 for NR with reduced bandwidth (BW). Other example embodiments may be directed to narrowband new radio (NB NR) operation, and reception of PDCCH in the NB NR scenario.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "base station", "cell", "node", "gNB", "network" or other similar language throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements. As used herein, the term "and/or" includes any and all combinations of one or more of the listed terms.

NR Rel-18 may provide support for dedicated spectrum less than 5MHz for frequency range 1 (FR1). These networks may benefit not only from the high spectral efficiency of 5G NR, but also from 5G NR's ultra-reliability and low latency.

While NR transmission BWs may be flexibly configured for physical channels and signals, only limited transmission BWs may be supported for physical downlink control channel (PDCCH) CORESET#0, such as for example, Type0-PDCCH CORESET#0, and synchronization signal and physical broadcast channel (PBCH) block (SSB) may have a single Tx BW for each subcarrier spacing. Thus, there is a need to consider what new transmission BWs are introduced in the sub-5 MHz spectrum particularly for SSB and PDCCH.

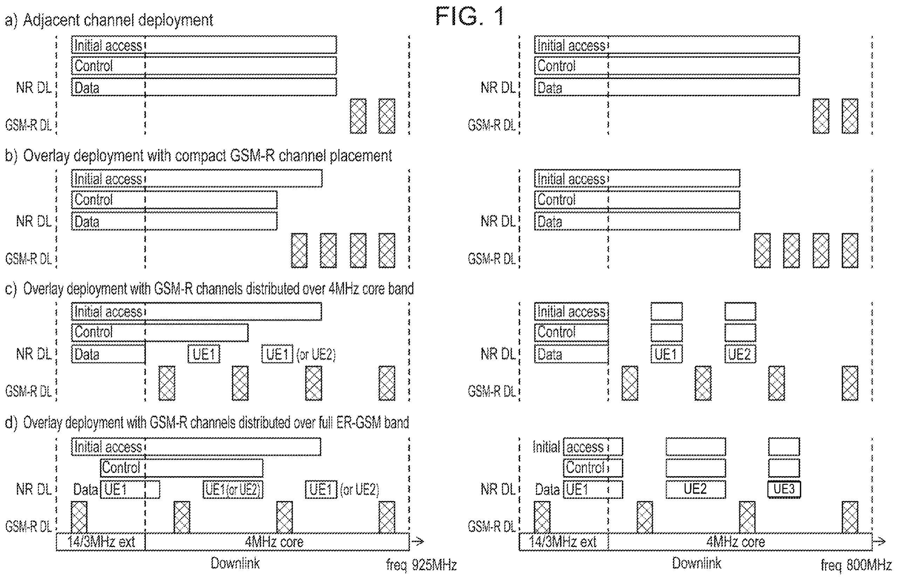

FIG. 1 illustrates an example deployment scenario. In particular, FIG. 1 illustrates a simultaneous deployment for NR and global system for mobile communications - railway (GSM-R) within a 5.6 MHz spectrum with downlink (DL) shown on the left, and uplink (UL) shown on the right. The future railway mobile communication system (FRMCS) has agreed to use NR. Under NB NR, there may be a spectrum allocation consideration of 2x5.6 MHz frequency division duplex (FDD) (874.4-880 MHz / 919.4-925 MHz). FRMCS may also consider soft migration from GSM-R, which may require parallel operation of GSM-R and NR. Additionally, approximately 3.6 MHz or 3 MHz of the spectrum may be available for NR (for both DL and UL) during the parallel operation, depending on the number of parallel GSM-R channels that may be needed.

FIG. 1 also illustrates an adjacent channel deployment of NR and GSM-R, where there is one boundary between NR and GSM-R. In some applications, NB NR may be considered for smart grids with a 2x3 MHz of FDD spectrum at a 900 MHz band, as well as for public safety with a 2x3 MHz FDD spectrum in band 28 for public protection and disaster relieve (PPDR).

As described above, it may be beneficial to enable the operation of 5G NR in a narrower BW than the 5 MHz channels for which it was originally designed. For example, deployment of NR in the 900 MHz FRMCS band may take place alongside legacy GSM-R carriers within a 5.6 MHz BW, which permits about 3.6 MHz to be used for NR. Similarly, there may be some cases where only 3 MHz channels are available for NR.

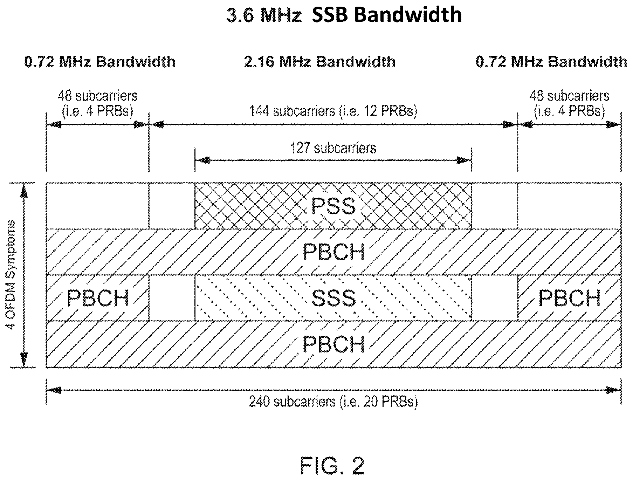

FIG. 2 illustrates an example of a NR initial access signals and channels with 15 kHz subcarrier spacing (SCS) for channel bandwidth ≥ 5MHz. As illustrated in FIG. 2, signals and channels of the synchronization signal and physical broadcast channel (PBCH) block (SSB) for channel bandwidth ≥ 5MHz transmitted by the NR base stations (gNBs) occupies 20 RBs and may not be designed for transmission in narrow channels. In initial cell selection (i.e., initial access), the UE may search a primary synchronization signal (PSS) of the SSB on predefined synch raster points. In other words, the synchronization raster indicates the frequency positions of the synchronization block that may be used by the UE for system acquisition when explicit signaling of the synchronization block position is not present. A global synchronization raster may be defined for all frequencies. The frequency position of the SS block may be defined as the frequency position of the SS block (SSREF) with a corresponding global synchronization channel number (GSCN).

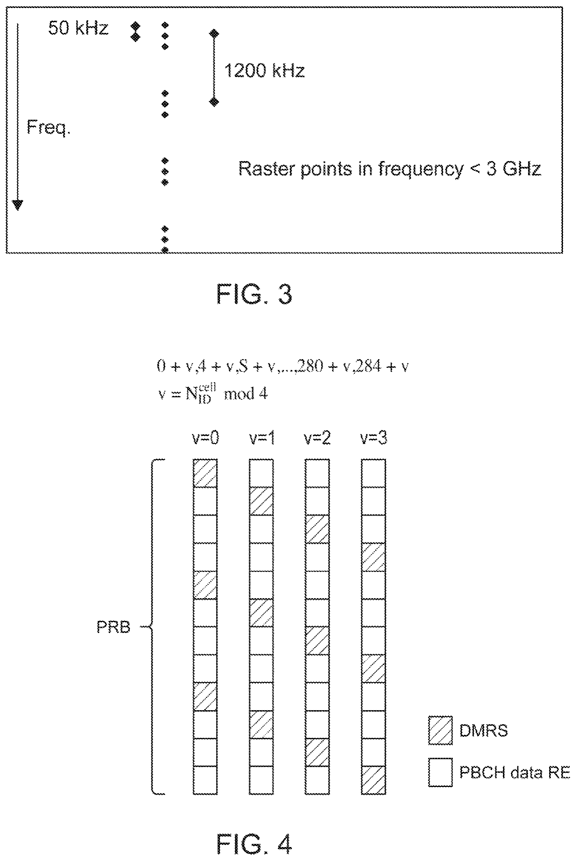

FIG. 3 illustrates an example of synch raster points below 3 GHz. As illustrated in FIG. 3, synch raster points below 3 GHz may be defined in clusters of three points. Upon detection of the PSS and consequently the SSS, the UE may perform demodulation of the PBCH using the channel estimates calculated from the PBCH demodulation reference signal (DMRS). DMRS for NR-PBCH may be mapped on every NR-PBCH symbol with a density across NR-PBCH with 3 resource elements (REs)/PRB/symbol. DMRS may have the same RE position in all NR-PBCH symbols, as illustrated in FIG. 4. In particular, FIG. 4 illustrates an example of DMRS allocation in PBCH physical resource block (PRB) with four different frequency domain shifts as a function of physical cell ID.

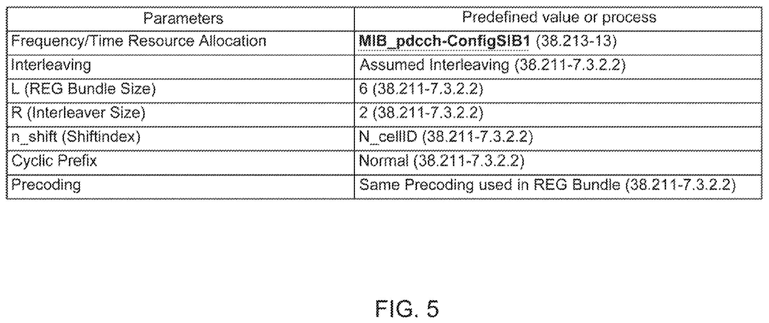

As described herein, a CORESET may represent a set of physical resources (i.e., a specific area on an NR DL resource grid), and a set of parameters that is used to carry PDCCH/downlink control information (DCI). The CORESET may involve many parameters configurable by radio resource control (RRC). Additionally, CORESET#0 may represent a resource set that transmits PDCCH for system information block type 1 (SIB 1) scheduling. CORESET#0 may not be configured by RRC since it is used before the RRC connection is established. Thus, CORESET#0 must be configured by a separate process using predefined parameters such as those illustrated in FIG. 5.

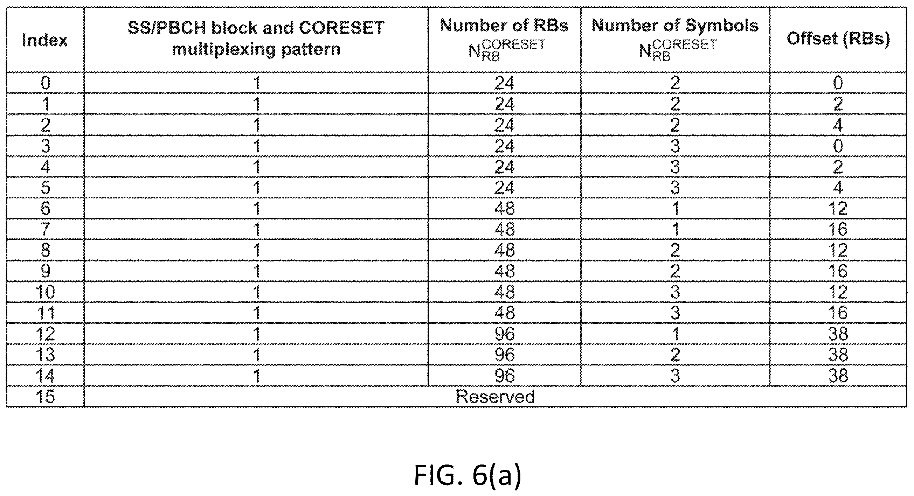

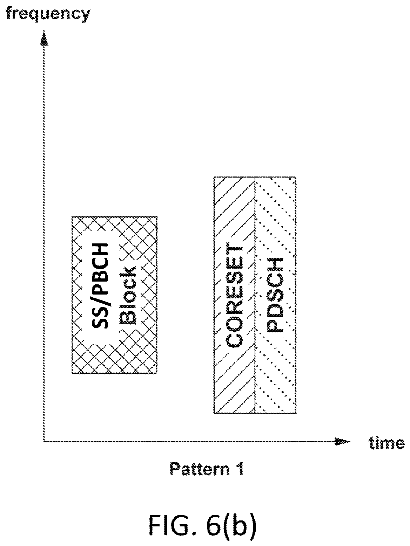

FIG. 6(a) illustrates an example set of resource blocks (RBs) and slot symbols of CORESET. In particular, FIG. 6(a) illustrates a set of RBs and slot symbols of a CORESET for PDCCH search space set when (SS/PBCH block, PDCCH) SCS is (15, 15) kHz for frequency bands with a minimum channel BW of 5 MHz or 10 MHz. As illustrated in FIG. 6(a), frequency/time resource allocation of CORESET#0 may be given by a master information block (MIB) (carried by PBCH) by means of an "Index". Additionally, FIG. 6(b) illustrates an NB NR scenario with multiplexing Pattern 1. FIG. 6(b) also illustrates an NB NR scenario with 15 kHz SCS (for both SSB and CORESET#0), and 24 RBs with 2 or 3 orthogonal frequency-division modulation (OFDM) symbols. The SSB may be in the same subcarrier raster as a common RB grid, on which CORESET#0 is located, but may not be aligned in the RB level. The subcarrier offset between the SSB and the common RB grid may be provided with a k_SSB parameter provided in the MIB. For instance, the k_SSB parameter may be in FR1 with 5 bits resulting in the use of 0, ..., 23 values to indicate the subcarrier offset between the SSB and the common RB grid. Additionally, the k_SSB parameter may have a characteristic that when the SSB and CORESET#0 have the same SCS, only values 0, ..., 11 are used. The maximum number of PDCCH candidates monitored per PDCCH occasion are shown in Table 1 below for PDCCH search space set.

**Table 1: Control channel element (CCE) levels and maximum number of PDCCH candidates per CCE aggregation level for common search space (CSS) sets configured by searchSpaceSIB1**

| **CCE Aggregation Level** | **Number of Candidates** |
|---|---|
| 4 | 4 |
| 8 | 2 |
| 16 | 1 |

For potential SSB changes for NB NR on sub-5 MHz BWs, a new synch raster may be provided for a 3 MHz channel BW, for example with 100 kHz frequency spacing and -90 or 90 kHz offset to the channel raster. A variety of Tx BWs may be supported for FRMCS. For example, when the available BW is between 4 MHz and 5 MHz (i.e., from 20 to 25 RBs), the NR design with 20 RB SSBs works by occupying a fraction of the 5 MHz channel BW. Additionally, when the available BW is between 3 MHz and less than 4 MHz (i.e., from 15 to 19 RBs), the UE may assume 3 MHz/15 RB BW prior to SIB1 acquisition. In other words, 15-RB SSB and CORESET#0 options may be used in such cases.

In other cases, approximately 10-14 GSM-R carriers may be needed for safe railway communications on band n100. 10-14 GSM-R carries may occupy 2-2.8 MHz leaving 3.6-2.8 MHz for the NR based FRMCS and necessary guard bands. While 15 RB BW is narrow enough to leave sufficient space to 10 GSM-R carriers, it may be too wide to facilitate coexistence with 14 GSM-R carriers. Thus, it may be desirable to support an optional second narrower BW for SSB and PDCCH in addition to the 3 MHz channel BW described above such as, for example, 12 or 13 RB BW.

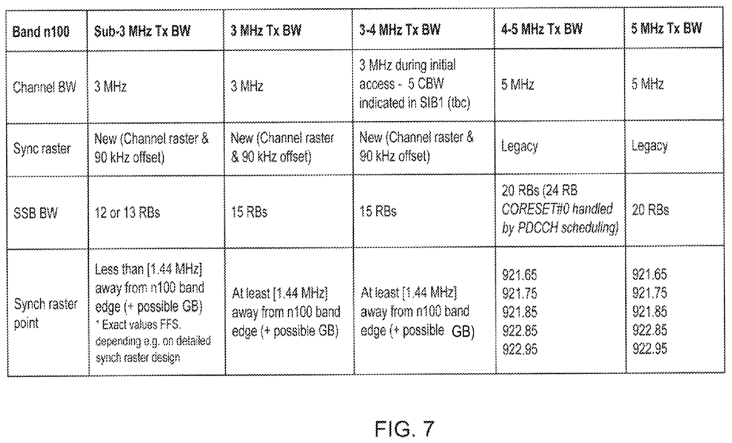

When considering potential SSB changes, it may be desirable for the UE to determine a correct puncturing pattern. For instance, the UE may ascertain which PRBs are punctured by defining a relationship between the synchronization raster position and the puncturing. In the puncturing operation, the NR base station (BS) may blank a signal mapped on certain predefined RBs that fall outside the desired transmission BW (i.e., the NR BS does not transmit the signals). Otherwise, the NR BS encoding and transmit processing may be kept unchanged. In some example embodiments, when the UE receives the transmission with punctured RBs, the UE may null the punctured RBs at the receiver (e.g., setting the log-likelihood ratios (LLRs) to zero in the channel decoder). Otherwise, the UE's receiver processing may be kept unchanged. If the UE detects PSS/SSS on a new synchronization raster point, the UE may assume NB (narrowband) PBCH transmission for both PBCH data and DMRS resource elements (REs) (e.g., 15 RB BW instead of 20RB WB used in legacy). If the UE detects PSS/SSS on a legacy synchronization raster point, the UE may assume normal transmission for PBCH. The determination of PBCH puncturing may be complicated when multiple PBCH transmission BWs are supported for the same synchronization raster. The PBCH transmission BW may be bound to the synchronization raster position detected with the PSS/SSS. For the case of new synchronization raster positions, when the detected PSS/SSS is too close to the n100 band edge so that 15 RB PBCH would not fit to the band, a narrower PBCH transmission BW (e.g., 12 or 13 RB BW) may be assumed. FIG. 7 illustrates a table of different channel BW, SSB transmission BW, and synchronization raster dependencies. In particular, FIG. 7 illustrates a table of channel BW, SSB BW and synchronization raster relations for bands n100.

There have been various solutions for how to indicate the amount of puncturing and the frequency domain allocation of the CORESET#0 in relation to the transmitted RBs of the SSB. However, these solutions often result in shortcomings including, for example, the possibility to correctly obtain PBCH while also a wrong BW hypothesis, which reduces PDCCH detection probability. There are also limitations in the indication of punctured CCEs and the CORESET#0 location relative to non-punctured SSB when SSB is punctured from both ends (e.g., in an asymmetric manner). Additionally, the CORESET#0 edge may remain aligned with the edge of non-punctured PBCH.

In view of the existing shortcomings, certain example embodiments may provide ways for CORESET#0 resource allocation in an NB NR scenario. It may be assumed that based on SSB detection (including correctly detected PBCH or related indication of punctured RBs on PBCH), the UE may have no uncertainty with respect to punctured and non-punctured RBs of PBCH.

As described herein, certain example embodiments may provide information for at least one entry of the CORESET#0 configuration table. The CORESET#0 configuration table with the information may be applied by the UE when the UE determines punctured transmission from the gNB (e.g., based on detecting PSS/SSS certain sync raster point(s)). The information may include, for example, the number of valid (transmitted) or punctured (not transmitted) RBs of CORESET#0. The information may also include one edge (e.g., a low edge corresponding to the lowest subcarrier of the lowest resource block in frequency) of the CORESET#0 being aligned with that of non-punctured RBs of PBCH. The information may further include indication of CCE interleaving option, e.g., interleaved or non-interleaved. In other example embodiments, the information may include a combination of some of the information described above. Depending on the embodiment, certain information elements (columns) of the existing CORESE#0 configuration table may be considered as useless (or invalid) or being used with another interpretation. For example, offset (RBs) may not be used (e.g., when one edge of the CORESET#0 is aligned with that of non-punctured RBs of PBCH). In another example embodiment, offset (RBs) may be used for conveying PDCCH-related puncturing information (such as for example, punctured RBs of Type0-PDCCH).

According to certain example embodiments, there may be multiple CORESET#0 configuration tables, and the applicable CORESET#0 configuration table (legacy or new tables(s) with information described above) may be determined based on certain conditions. For instance, one condition may be that the new configuration table(s) may contain an entry with any one or more of the information described above. Another condition may be that the applicable CORESET#0 configuration table (legacy or new table(s)) is determined based on an identified sync raster point (legacy or new sync raster point), and operationally if the sync raster point is close to the band edge (e.g., low or high edge of the band in frequency; band may include required guard bands and usable RBs in frequency). For example, when the PSS/SSS is detected on a legacy sync raster point the legacy configuration table may be applied. In another example embodiment, when the PSS/SSS is detected on a new sync raster point and there is room in the band for the PBCH with 15 non-punctured RBs, the first new/modified CORESET#0 configuration table may be applied. In further example embodiments, when the PSS/SSS is detected on a new sync raster point and there is no room in the band for the PBCH with 15 non-punctured RBs as being too close to the band edge (case of 12/13 non-punctured RBs for the PBCH), the second new/modified CORESET#0 configuration table may be applied. In certain example embodiments, the UE may also determine to apply the new table based on invalid SCS combinations of SSB and PDCCH indicated in a master information block (MIB), and/or based on a k_SSB value indicated in the MIB.

In certain example embodiments, multiple (e.g., 2) tables may be predetermined with the information described above. For instance, multiple (e.g., 2) new CORESET#0 configuration tables (with information described above) may be predetermined. The UE may determine the configuration table to apply based on at least one of the following: the sync raster point, number of valid PBCH RBs, SCS combination of SSB and PDCCH, and/or k_SSB value. For example, if the number of valid PBCH RBs is 20 RBs, then the legacy table may be applicable. When there are 15 RBs, a first new configuration table may be applicable, and when there are 12 or 13 RBs, second new configuration table may be applied.

In some example embodiments, the application of the configuration table may be determined based on the detected sync raster point. For instance, the sync raster point on a legacy raster may result in application of the legacy table. When the sync raster point is on a new raster and not close (e.g., SSB/PBCH transmission BW corresponding to the first configuration/puncturing pattern may be fit into the band and not fall upon a guard band of the band) to the band edge, the first new configuration table may be applied. When the sync raster point is on the new raster and is close to the band edge, the second new configuration table may be applied. The determination whether the SSB BW is close to the band edge may be based on a configured threshold, or preconfigured/predefined in standard.

As indicated above, the UE may determine the configuration table to apply based on the SCS combination of SSB and PDCCH, and/or k_SSB value. For example, an SCS combination of {15,15} may result in application of the legacy table. Additionally, an SCS combination of {15,30}, and k_SSB of less than 12 may result in application of the first new configuration table. Further, with an SCS combination of {15,30} and k_SSB greater than 11, the second new configuration table may be applied. In these cases, when operating according to NR<5MHz scenario, SCS combination of {15,30} would be interpreted as SCS combination of {15, 15}, or k_SSB greater than 11, would be interpreted (k_SSB-12), respectively.

According to certain example embodiments, the entries with information described above may form a subset of an existing CORESET#0 configuration table. Certain entries of the table may be used for legacy operation, and the entries with information described above may be used with punctured CORESET#0.

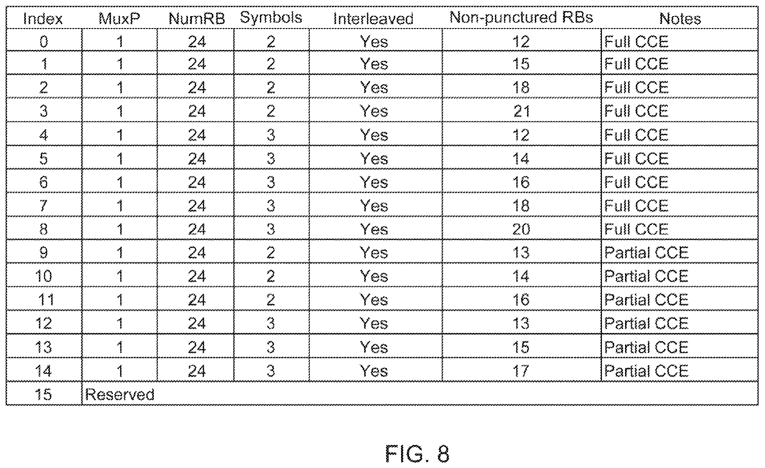

FIG. 8 illustrates a new CORESET#0 configuration table, according to certain example embodiments. As illustrated in FIG. 8, the CORESET#0 configured by the new CORESET#0 configuration table may have a low edge aligned with a low edge of a punctured SSB. Additionally, the rows in the table of FIG. 8 may indicate the number of non-punctured RBs, and show an interleaved CCE-to-REG mapping. The number of non-punctured RBs may be given in a specific column indicating it, or it may be given by reusing an existing column of the legacy table, e.g., the column "Number of RBs". In other words, the number of non-punctured RBs may be indicated either in a new column or by reusing an existing column. In another example embodiment, the CORESET#0 configuration table may indicate the number of RBs before puncturing, for example, 24 as in the legacy table. The number of RBs may also be smaller than 24 or larger than 24, at least for certain rows (=Indexes). On top of that, the CORESET#0 configuration table may indicate the puncturing pattern for PDCCH. One benefit of this approach (i.e., the number of RBs before puncturing being 24, CORESET#0 configuration table indicating the puncturing pattern for PDCCH) is that there is no need to define new size options for CORESET#0. Another benefit is that it makes it possible to use different puncturing pattern (i.e. larger Tx BW) for RRC configured search spaces associated to CORESET#0 (in other words, puncturing pattern can be a new information element in CORESET configuration, or in search space configuration. Alternatively, it can be a new RRC parameter). This can be beneficial especially in 3-5 MHz scenario. As an example, a puncturing pattern can seen as a bitmap of e.g., 24 bits (24 bits being the CORESET#0 size in frequency). A "0" means that if the PDCCH to be transmitted does not include the corresponding RB, gNB punctures it (i.e., such RB is not transmitted), and a "1" means that if the PDCCH to be transmitted includes the corresponding RB, the RB is transmitted. As another example, a puncturing pattern may define whether the RBs are punctured from the lower, the higher, or both ends of the frequency band, and/or how many RBs are to be punctured. According to the embodiment, the resolution used in puncturing pattern can be 1 RB, 2RBs, 3RBs, 1CCE, etc. Depending on the scenario, puncturing pattern may cover only a portion of the COREEST, e.g. only 12 RBs from one end, or X RBs from both ends. The remaining RBs of the CORESET can be considered as non-punctured. Depending on the scenario, puncturing pattern can be indicated via the number of transmitted RBs counted from the lowest RB (or highest RB) of the CORESET. In certain example embodiments, the UE may determine to apply the table of FIG. 8 based on the sync raster point or based on invalid SCS combination of SSB and PDCCH indicated in the MIB.

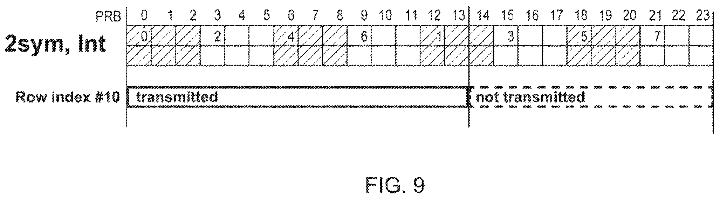

FIG. 9 illustrates an example entry of the CORESET#0 configuration table of FIG. 8, according to certain example embodiments. In particular, FIG. 9 illustrates the row with index #10 according to the CORESET#0 configuration table of FIG. 8, which corresponds to a CORESET with two OFDM symbols, and includes an interleaved CCE-to-REG mapping. FIG. 9 also represents a partial CCE scenario where CCE #1 is partially punctured. As illustrated in FIG. 9, the RB 0 of CORESET#0 is aligned with the first transmitted PRB of the SSB. As also illustrated in FIG. 9, the last 10 RBs of the PDCCH (for AL8) are punctured (i.e., not transmitted).

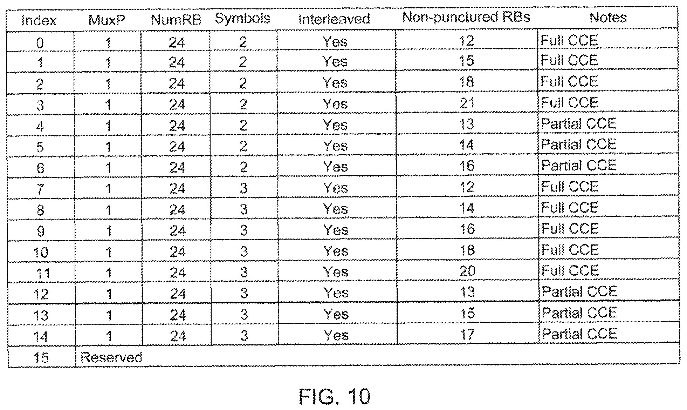

FIG. 10 illustrates another new CORESET#0 configuration table, according to certain example embodiments. As illustrated in FIG. 10, the new CORESET#0 configuration table shows a low edge of the PDCCH CORESET#0 is aligned with the low edge of the punctured SSB, and each row indicates the number of non-punctured RBs. The rows in the table also indicate interleaved or non-interleaved CCE-to-REG mapping. In this example, interleaving may be used for a 2-symbol CORESET, and non-interleaving may be used for a 3-symbol CORESET. In some example embodiments, the UE may determine to apply the table of FIG. 10 based on the sync raster point, or based on an invalid SCS combination of SSB and PDCCH indicated in the MIB.

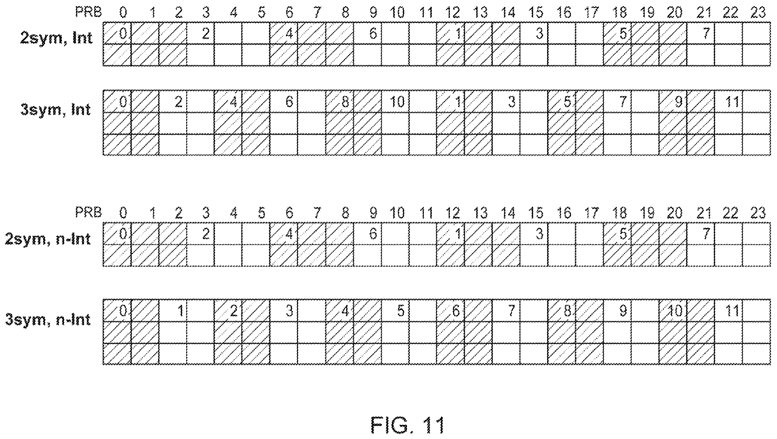

FIG. 11 illustrates an interleaved and non-interleaved CCE-to-REG mapping, according to certain example embodiments. As illustrated in FIG. 11, the UE may determine, based on the new table and row index, that RB 0 of CORESET#0 is aligned with the first transmitted PRB of the SSB. The UE may also determine that the number of RBs that are transmitted (i.e., non-punctured RBs) such as, for example, row with index 10 (in CORESET#0 table of FIG. 10), indicates that the first 18 RBs are transmitted. The UE may further determine whether interleaved or non-interleaved CCE-to-REG mapping is used. For example, row with index 10 of FIG. 10 indicates that no interleaving is applied.

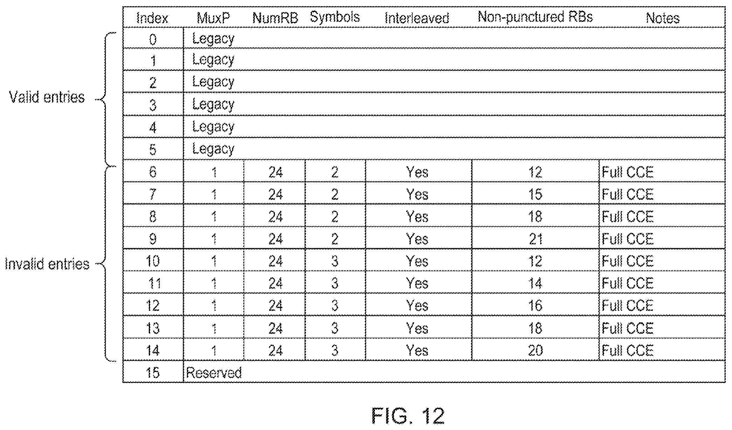

FIG. 12 illustrates a modified CORESET#0 configuration table, according to certain example embodiments. As illustrated in FIG. 12, the CORESET#0 configuration table may be based on an existing configuration table so that invalid entries of the existing configuration table (i.e., those having more than 24 RBs) are replaced with the entries that are applicable to a puncturing scenario (i.e., with information described above). According to certain example embodiments, the replaced invalid entries can be used when the UE operates in certain bands such as, for example, n100 with a maximum channel bandwidth (CBW) of 5 MHz, and/or when the UE detects the PSS/SSS on a sync raster point that indicates that the system is operating under NB NR.

In some example embodiments, the UE may determine valid and invalid row entries according to the NB NR scenario. For instance, the UE may determine that valid entries are those having 24 RBs, and invalid entries are those having RBs greater than 24. In the example of FIG. 12, the invalid entries are replaced by entries applicable to NB NR with NumRB indicating the number of RBs before puncturing, e.g., 24. In further example embodiments, the UE may obtain the row index for the modified CORESET#0 configuration table from the MIB. For the invalid entries, the UE may determine that the low edge of the CORESET#0 configured by the modified CORESET#0 table is aligned with the low edge of the punctured SSB. Additionally, for valid entries, the UE may determine that the legacy operation applies (i.e., no puncturing, CCE-level interleaving, start of CORESET#0 edge defined by k_SSB, etc.).

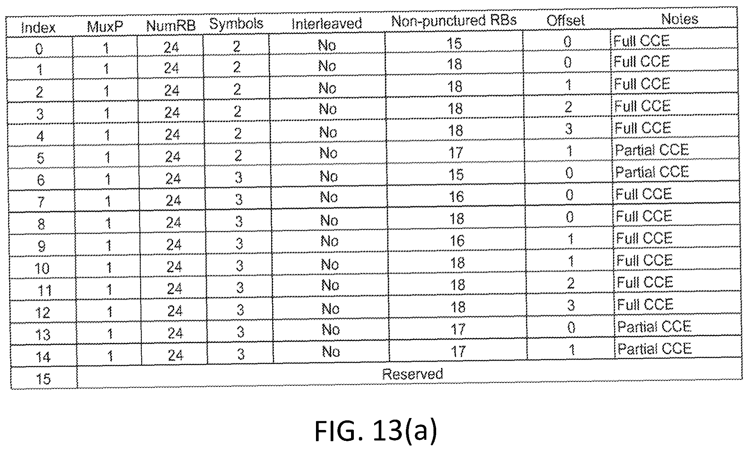

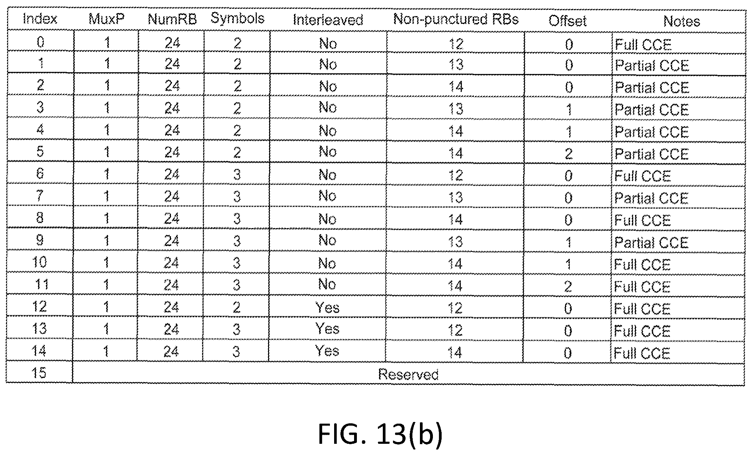

FIG. 13(a) illustrates a first new CORESET#0 configuration table, according to certain example embodiments when multiple configuration tables are configured, and FIG. 13(b) illustrates a second new configuration table, according to certain example embodiments when multiple configuration tables are configured. As illustrated in FIGs. 13(a) and 13(b), two new configuration tables may be introduced, in addition to the legacy configuration table. In some example embodiments, the first new configuration table in FIG. 13(a) may be used with e.g., 15 RB SSB, and when NR has a BW allocation between e.g., 3 MHz - 4 MHz or between 3 MHz - 4.4 MHz. In other example embodiments, the second new configuration table in FIG. 13(b) may be used with e.g., 12 RB SSB and/or 13 RB SSB, and when the NR has a BW allocation between e.g., 2.4 MHz - 3 MHz. As illustrated in the tables of FIGs. 13(a) and 13(b), the offset column indicates the RB offset between the lowest RB of CORESET#0 and the lowest RB of the SSB.

According to certain example embodiments, the UE may perform PDCCH blind detections by applying the new CORESET#0 configuration table illustrated in FIGs. 8 and/or 10. For instance, the UE may search for PSS/SSS in the band where the NB NR may be deployed. In searching for PSS/SSS, there may be a separate sync raster point defined for the NB NR in certain bands. After performing the search, the UE may detect the PSS/SSS on a sync raster point indicating that the serving cell is operating under NB NR. The UE may also receive and demodulate PBCH according to certain puncturing assumptions (e.g., punctured and non-punctured RBs of PBCH). For example, the UE may determine non-punctured RBs that are transmitted for PBCH.

The UE may also obtain from the MIB the row index pointing into the new CORESET#0 configuration table. For instance, the UE may determine to apply the new configuration table when it has detected that the PSS/SSS on the sync raster point indicates use of NB NR. Once the UE has determined to apply the new configuration, the UE may align the low edge (e.g., the first transmitted RB in the frequency domain (high edge may correspond to the last transmitted RB in the frequency domain)) of the CORESET#0 in frequency with the low edge of the transmitted SSB. The UE may also determine a number of RBs for the CORESET#0 based on the row index, and optionally determine whether interleaved or non-interleaved CCE-to-REG mapping is applied based on the row index. Once the UE has determined the CORESET#0 resources (i.e., determined number of non-punctured RBs for the CORESET#0), the UE may perform PDCCH blind detections (e.g., gathering DL control information for both DL and UL grants) on the determined CORESET#0 resources.

According to other example embodiments, the UE may perform PDCCH blind detections by applying the modified CORESET#0 configuration table illustrated in FIG. 12. For instance, the UE may search for PSS/SSS in the band where the NB NR may be deployed. In this example, there may be separate sync raster points defined for the NB NR in certain bands. As a result of the search, the UE may detect the PSS/SSS on a sync raster point, and determine that the system is operating under NB NR. The UE may also determine that the modified CORESET#0 configuration table is to be applied.

Furthermore, the UE may receive and demodulate the PBCH according to certain puncturing assumptions (e.g., punctured and non-punctured RBs of PBCH). For example, the UE may determine non-punctured RBs that are transmitted for PBCH. The UE may also obtain from the MIB the row index pointing into the modified CORESET#0 configuration table.

In some example embodiments, for certain CORESET#0 configuration table entries (marked as "valid" in the table of FIG. 12), the legacy operation (i.e., operation when there is no puncturing performed) may apply. For instance, the legacy operation may include the legacy assumption on PRB start, RB offset, and transmission BW. In other example embodiments, for certain CORESET#0 configuration table entries (marked as "invalid" in the table of FIG. 12), the UE may apply the new CORESET#0 reception operation. For instance, the new CORESET#0 reception operation may include the UE aligning the low edge of the CORESET#0 in frequency with the low edge of the transmitted SSB. The new CORESET#0 reception operation may also include the UE determining the number of RBs for the CORESET#0 based on the row index. Further, the new CORESET#0 reception operation may optionally include the UE determining whether interleaved or non-interleaved CCE-to-REG mapping is applied based on the row index. In other example embodiments, the new CORESET#0 reception operation may include one or a combination of any of the three operations described above. Once the UE has determined the CORESET#0 resources, the UE may perform PDCCH blind detections on the determined CORESET#0 resources.

According to other example embodiments, the UE may perform PDCCH blind detections by applying the new CORESET#0 configuration table illustrated in FIGs. 13(a) and 13(b), when multiple configuration tables are configured. For instance, the UE may search for PSS/SSS in the band where the NB NR may be deployed. In this example, there may be separate sync raster points defined for the NB NR in certain bands. As a result of the search, the UE may detect the PSS/SSS on a sync raster point, and determine that the system is operating under NB NR. The UE may also receive and demodulate PBCH according to certain puncturing assumptions (e.g., punctured and non-punctured RBs of PBCH). For example, the UE may determine non-punctured RBs that are transmitted for PBCH, and the UE may obtain the subscriber spacing and subcarrier offset k_SSB from the MIB.

In certain example embodiments, the UE may determine the applicable CORESET#0 configuration table. For instance, the determination may be based on the determined number of non-punctured RBs for PBCH. Under this approach, for example, for 20 RBs, the UE may determine the legacy CORESET#0 configuration table to be applicable. The UE may also determine, for example, for 15 RBs, that the first new CORESET#0 configuration table is applicable (e.g., FIG. 13(a)). Additionally, the UE may determine, for example, for 12 or 13 RBs, that the second new CORESET#0 configuration table is applicable (e.g., FIG. 13(b)). It should be noted that the numbers of RBs listed above based on which the UE determines the CORESET#0 configuration table to apply are just examples for illustration purpose.

According to certain example embodiments, the UE may determine the applicable CORESET#0 configuration table based on the identified sync raster point. For instance, if the PSS/SSS has been detected based on the legacy sync raster point, the UE may determine that the legacy CORESET#0 configuration table is applicable. In another example embodiment, if the PSS/SSS has been detected based on a new sync raster point not close to the band edge, the UE may determine that the first new CORESET#0 configuration table is applicable. In a further example embodiment, if the PSS/SSS has been detected based on a new sync raster point to be close to the band edge, the UE may determine that the first new CORESET#0 configuration table is applicable.

In certain example embodiments, the UE may determine the applicable CORESET#0 configuration table based on the SCS combination of SSB and PDCCH and/or k_SSB value determined from the received MIB. Under this approach, for example, for an indicated PDCCH SCS of 15 kHz in MIB (i.e., SCS combination of {15, 15}), the UE may determine that the legacy CORESET#0 configuration table is applicable. In another example embodiment, for example, for an indicated PDCCH SCS of 30 kHz in MIB (i.e., SCS combination of {15, 30}) and a subcarrier offset value k_SSB<12, the UE may determine that the first new CORESET#0 configuration table is applicable. In a further example embodiment, for example, for an indicated PDCCH SCS of 30 kHz in MIB (i.e., SCS combination of {15, 30}) and subcarrier offset value k_SSB>11, the UE may determine that the second new CORESET#0 configuration table is applicable.

According to certain example embodiments, the UE may obtain the row index to the determined CORESET#0 configuration table from the MIB to determine the CORESET#0 resources. For example, for the determined legacy table, the UE may determine that the CORESET#0 resources based on the legacy CORESET#0 operation including the applicable subcarrier offset given by k_SSB in MIB, as well as the assumption of CCE-level interleaving. In other example embodiments, for the determined first or second new table (e.g., tables of FIGs. 13(a) and (b)), the UE may apply the new CORESET#0 reception operation.

In certain example embodiments, the new CORESET#0 reception operation may include the UE determining the subcarrier offset to be 0 independently of the MIB indicated k_SSB. The UE may also determine the number of RBs for the CORESET#0 based on the row index. In addition, the UE may determine the RB offset of CORESET#0 based on the row index. Further, the UE may optionally determine whether interleaved or non-interleaved CC-to-REG mapping is applied based on the row index. Once the CORESET#0 resources have been determined, the UE may perform PDCCH blind detections on the determined CORESET#0 resources.

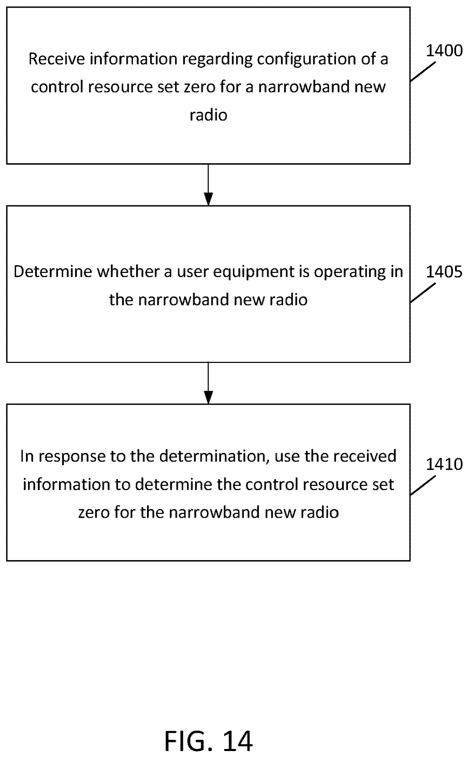

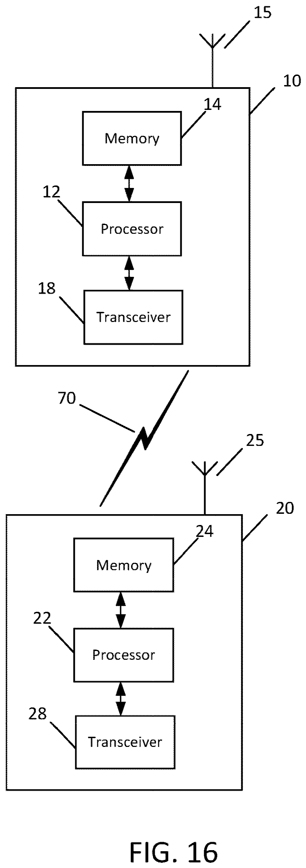

FIG. 14 illustrates an example flow diagram of a method, according to certain example embodiments. In an example embodiment, the method of FIG. 14 may be performed by a network entity, or a group of multiple network elements in a 3GPP system, such as LTE or 5G-NR. For instance, in an example embodiment, the method of FIG. 14 may be performed by a UE similar to one of apparatuses 10 or 20 illustrated in FIG. 16.

According to certain example embodiments, the method of FIG. 14 may include, at 1400, receiving information regarding configuration of a control resource set zero for a narrowband new radio. According to certain example embodiments, the received information may include at least one of information of punctured or non-punctured resource blocks, or interleaving information. The method may also include, at 1405, determining whether a user equipment is operating in the narrowband new radio. The method may further include, at 1410, in response to the determination, using the received information to determine the control resource set zero for the narrowband new radio.

According to certain example embodiments, the method may also include aligning a low edge of the control resource set zero in frequency with a low edge of a transmitted synchronization signal block. In other example embodiments, a high edge of the control resource set zero in frequency may be aligned with a high edge of a transmitted synchronization signal block. According to some example embodiments, the information of punctured resource blocks comprises a puncturing pattern defined by whether resource blocks are punctured from one or two ends of a frequency band, or a number of resource blocks to be punctured. According to other example embodiments, the information of non-punctured resource blocks may be indicated via a number of transmitted resource blocks counted from a lowest resource block or a highest resource block of the control resource set zero.

In certain example embodiments, the interleaving information may include an indication of a control channel element interleaving option which indicates interleaved or non-interleaved control channel elements or resource element groups. In some example embodiments, the determination of whether the user equipment is operating in the narrowband new radio may be based on at least one of a synchronization raster point, a number of valid physical broadcast channel resource blocks, a subcarrier spacing combination of a synchronization signal block and a physical downlink control channel, or a subcarrier offset between the synchronization signal block and a resource on which the control resource set zero is located. In other example embodiments, the received information may be carried in a configuration table by adding or replacing one or more entries in a configuration table of a legacy scenario.

According to certain example embodiments, the received information may be carried in a configuration table in addition to a configuration table of a legacy scenario, and the method may also include determining to use the configuration table or the configuration table of a legacy scenario. According to some example embodiments, the received information may include information for a plurality of narrowband new radio scenarios, and the method may further include determining which information for the plurality of narrowband new radio scenarios to use. According to other example embodiments, the determining whether the user equipment is operating in the narrowband new radio may include detecting a synchronization signal on the synchronization raster point which indicates deployment of a narrowband new radio, and the using the received information may include applying the received information for the control resource set zero based on the detection of the synchronization signal.

In certain example embodiments, the method may also include receiving a physical broadcast channel according to a puncturing assumption, and demodulating the physical broadcast channel according to the puncturing assumption. In some example embodiments, the method may further include obtaining, from a master information block indicated in the received physical broadcast channel, a row index pointing into the configuration table, determining a number of resource blocks of the control resource set zero based on the row index of the configuration table, and performing a physical downlink control channel blind detection on a resource of the determined resource blocks. In other example embodiments, the method may also include determining at least one of a lower edge of a transmitted synchronization signal block, or a higher edge of a transmitted synchronization signal block. Alternatively, the method may further include obtaining a subcarrier spacing and a subcarrier offset from the master information block.

According to certain example embodiments, the method may also include, when entries of the configuration table are considered as valid, implementing a legacy operation comprising a legacy assumption on a physical resource block start, a resource block offset, and a transmission bandwidth. According to some example embodiments, the method may further include, when the entries of the configuration table are considered as invalid, implementing a new control resource set zero reception operation comprising an alignment of a low edge of the control resource set zero in frequency with a low edge of a synchronization signal block. According to other example embodiments, the method may further include determining whether an interleaved or a non-interleaved control channel element to resource element group mapping is applied based on the row index.

In certain example embodiments, the determining which information for the plurality of narrowband new radio scenarios to use may include determining a configuration table of a plurality of configuration tables to be applicable. In some example embodiments, determination of the configuration table comprises at least one of determining an existing control resource set zero configuration table to be applicable when a synchronization signal has been detected based on an existing synchronization raster point, determining a first new control resource set zero configuration table to be applicable when the synchronization signal has been detected based on a new synchronization raster point not close to a band edge, or determining a second new control resource set configuration table to be applicable when the synchronization signal has been detected based on a new synchronization raster point close to a band edge. In other example embodiments, when the subcarrier spacing combination of the synchronization signal block and the physical downlink control channel and/or the subcarrier offset are determined from the received master information block, the method may further include determining a configuration table of a plurality of configuration tables to be applicable based on the subcarrier spacing combination and/or the subcarrier offset. In further example embodiments, the method may also include determining a subcarrier offset to be 0 independent of the master information block indicated subcarrier offset, and determining a resource block offset of the control resource set zero based on the row index.

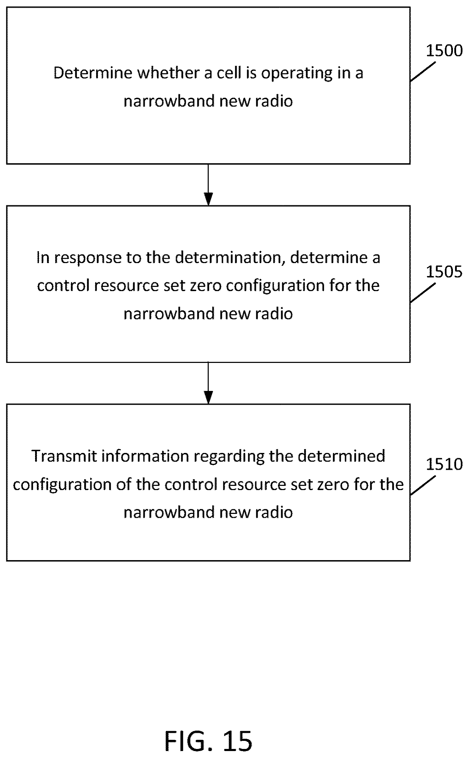

FIG. 15 illustrates an example flow diagram of another method, according to certain example embodiments. In an example embodiment, the method of FIG. 15 may be performed by a network entity, or a group of multiple network elements in a 3GPP system, such as LTE or 5G-NR. For instance, in an example embodiment, the method of FIG. 15 may be performed by a gNB, similar to one of apparatuses 10 or 20 illustrated in FIG. 16.

According to certain example embodiments, the method of FIG. 15 may include, at 1500, determining whether a cell is operating in a narrowband new radio. The method may also include, at 1505, in response to the determination, determining a control resource set zero configuration for the narrowband new radio. The method may further include, at 1510, transmitting information regarding the determined configuration of the control resource set zero for the narrowband new radio. According to certain example embodiments, the transmitted information may include at least one of information of punctured or non-punctured resource blocks, or interleaving information.

FIG. 16 illustrates a set of apparatuses 10 and 20 according to certain example embodiments. In certain example embodiments, the apparatus 10 may be an element in a communications network or associated with such a network, such as a UE, mobile equipment (ME), mobile station, mobile device, stationary device, IoT device, or other device. It should be noted that one of ordinary skill in the art would understand that apparatus 10 may include components or features not shown in FIG. 16.

In some example embodiments, apparatus 10 may include one or more processors, one or more computer-readable storage medium (for example, memory, storage, or the like), one or more radio access components (for example, a modem, a transceiver, or the like), and/or a user interface. In some example embodiments, apparatus 10 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 10 may include components or features not shown in FIG. 16.

As illustrated in the example of FIG. 16, apparatus 10 may include or be coupled to a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in FIG. 16, multiple processors may be utilized according to other example embodiments. For example, it should be understood that, in certain example embodiments, apparatus 10 may include two or more processors that may form a multiprocessor system (e.g., in this case processor 12 may represent a multiprocessor) that may support multiprocessing. According to certain example embodiments, the multiprocessor system may be tightly coupled or loosely coupled (e.g., to form a computer cluster).

Processor 12 may perform functions associated with the operation of apparatus 10 including, as some examples, precoding of antenna gain/phase parameters, encoding and decoding of individual bits forming a communication message, formatting of information, and overall control of the apparatus 10, including processes and examples illustrated in FIGs. 1-14.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In certain example embodiments, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10 to perform any of the methods and examples illustrated in FIGs. 1-14.

In some example embodiments, apparatus 10 may also include or be coupled to one or more antennas 15 for receiving a downlink signal and for transmitting via an UL from apparatus 10. Apparatus 10 may further include a transceiver 18 configured to transmit and receive information. The transceiver 18 may also include a radio interface (e.g., a modem) coupled to the antenna 15. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an UL.

For instance, transceiver 18 may be configured to modulate information on to a carrier waveform for transmission by the antenna(s) 15 and demodulate information received via the antenna(s) 15 for further processing by other elements of apparatus 10. In other example embodiments, transceiver 18 may be capable of transmitting and receiving signals or data directly. Additionally or alternatively, in some example embodiments, apparatus 10 may include an input and/or output device (I/O device). In certain example embodiments, apparatus 10 may further include a user interface, such as a graphical user interface or touchscreen.

In certain example embodiments, memory 14 stores software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software. According to certain example embodiments, apparatus 10 may optionally be configured to communicate with apparatus 20 via a wireless or wired communications link 70 according to any radio access technology, such as NR.

According to certain example embodiments, processor 12 and memory 14 may be included in or may form a part of processing circuitry or control circuitry. In addition, in some example embodiments, transceiver 18 may be included in or may form a part of transceiving circuitry.

For instance, in certain example embodiments, apparatus 10 may be controlled by memory 14 and processor 12 to receive information regarding configuration of a control resource set zero for a narrowband new radio. According to certain example embodiments, the received information may include at least one of information of punctured or non-punctured resource blocks, or interleaving information. Apparatus 10 may also be controlled by memory 14 and processor 12 to determine whether a user equipment is operating in the narrowband new radio. Apparatus 10 may further be controlled by memory 14 and processor 12 to, in response to the determination, use the received information to determine the control resource set zero for the narrowband new radio.

As illustrated in the example of FIG. 16, apparatus 20 may be a network, core network element, or element in a communications network or associated with such a network, such as a gNB, BS, cell, or NW. It should be noted that one of ordinary skill in the art would understand that apparatus 20 may include components or features not shown in FIG. 16.

As illustrated in the example of FIG. 16, apparatus 20 may include a processor 22 for processing information and executing instructions or operations. Processor 22 may be any type of general or specific purpose processor. For example, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in FIG. 16, multiple processors may be utilized according to other example embodiments. For example, it should be understood that, in certain example embodiments, apparatus 20 may include two or more processors that may form a multiprocessor system (e.g., in this case processor 22 may represent a multiprocessor) that may support multiprocessing. In certain example embodiments, the multiprocessor system may be tightly coupled or loosely coupled (e.g., to form a computer cluster).

According to certain example embodiments, processor 22 may perform functions associated with the operation of apparatus 20, which may include, for example, precoding of antenna gain/phase parameters, encoding and decoding of individual bits forming a communication message, formatting of information, and overall control of the apparatus 20, including processes and examples illustrated in FIGs. 1-13 and 15.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In certain example embodiments, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20 to perform the methods and examples illustrated in FIGs. 1-13 and 15.

In certain example embodiments, apparatus 20 may also include or be coupled to one or more antennas 25 for transmitting and receiving signals and/or data to and from apparatus 20. Apparatus 20 may further include or be coupled to a transceiver 28 configured to transmit and receive information. The transceiver 28 may include, for example, a plurality of radio interfaces that may be coupled to the antenna(s) 25. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an UL).

As such, transceiver 28 may be configured to modulate information on to a carrier waveform for transmission by the antenna(s) 25 and demodulate information received via the antenna(s) 25 for further processing by other elements of apparatus 20. In other example embodiments, transceiver 18 may be capable of transmitting and receiving signals or data directly. Additionally or alternatively, in some example embodiments, apparatus 20 may include an input and/or output device (I/O device).

In certain example embodiment, memory 24 may store software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

According to some example embodiments, processor 22 and memory 24 may be included in or may form a part of processing circuitry or control circuitry. In addition, in some example embodiments, transceiver 28 may be included in or may form a part of transceiving circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10 and 20) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

In other example embodiments, apparatus 20 may be controlled by memory 24 and processor 22 to determine whether a cell is operating in a narrowband new radio. Apparatus 20 may also be controlled by memory 24 and processor 22 to, in response to the determination, determine a control resource set zero configuration for the narrowband new radio. Apparatus 20 may further be controlled by memory 24 and processor 22 to transmit information regarding the determined configuration of the control resource set zero for the narrowband new radio. According to certain example embodiments, the transmitted information may include at least one of information of punctured or non-punctured resource blocks, or interleaving information.

In some example embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of the operations.

Certain example embodiments may be directed to an apparatus that includes means for performing any of the methods described herein including, for example, means for receiving information regarding configuration of a control resource set zero for a narrowband new radio. According to certain example embodiments, the received information may include at least one of information of punctured or non-punctured resource blocks, or interleaving information. The apparatus may also include means for determining whether a user equipment is operating in the narrowband new radio. The apparatus may further include means for, in response to the determination, using the received information to determine the control resource set zero for the narrowband new radio.

Other example embodiments may be directed to an apparatus that includes means for determining whether a cell is operating in a narrowband new radio. The apparatus may also include means for, in response to the determination, determining a control resource set zero configuration for the narrowband new radio. The apparatus may further include means for transmitting information regarding the determined configuration of the control resource set zero for the narrowband new radio. According to certain example embodiments, the transmitted information may include at least one of information of punctured or non-punctured resource blocks, or interleaving information.

Certain example embodiments described herein provide several technical improvements, enhancements, and /or advantages. For instance, in some example embodiments, it may be possible to allocate NB CORESET#0 for NR without additional signaling overhead. Additionally, in other example embodiments, it may be possible to maintain a UE PDCCH monitoring burden (BD budget), and maintain a consistent PDCCH hashing function. For instance, the mapping of PDCCH candidates of a search space set to CCEs of the associated CORESET may be implemented by means of a hash function. The hash function may randomize the allocation of the PDCCH candidates within the CORESET over time. Furthermore, the proposed solution can be made without introducing new size options for CORESET#0. Furthermore, it enables different puncturing patterns for PDCCH and search spaces configured via radio resource control (RRC) signaling. For example, at least certain RRC configured search spaces can be configured with smaller puncturing, and they can be used according to the actual the interference situation (e.g., in 3-5MHz scenario).

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

### Partial Glossary:

3GPP 3rd Generation Partnership Project
5G 5th Generation
5GCN 5G Core Network
5GS 5G System
AL Aggregation Level
BD Blind Detection
BS Base Station
BW Bandwidth
CCE Control Channel Element
CORESET Control Resource Set
DMRS Demodulation Reference Signal
eNB Enhanced Node B
E-UTRAN Evolved UTRAN
FR1 Frequency Range 1
FRMCS Future Railway Mobile Communication System
gNB 5G or Next Generation NodeB
GSCN Global Synchronization Channel Number
GSM-R GSM Railway
LTE Long Term Evolution
MIB Master Information Block
NB Narrowband
NR New Radio
NW Network
PBCH Physical Broadcast Channel
PDCCH Physical Downlink Control Channel
PRB Physical Resource Block
PSS Primary Synchronization Signal
RE Resource Element
REG Resource Element Group
SCS Subcarrier Spacing
SI System Information
SIB System Information Block
SRS Sounding Reference Signal
SS Synchronization Signal
SSB Synchronization Signal Block
SSREF The Frequency Position of the SS Block
SSS Secondary Synchronization Signal
UE User Equipment
UL Uplink

Further aspects of the invention are the following:
1. An apparatus, comprising:
   means for determining a control resource set zero configuration table to be applicable based on a synchronization raster of a narrowband new radio where a synchronization signal block has been detected;
   means for receiving a physical broadcast channel according to a puncturing assumption;
   means for obtaining, from a master information block indicated in the received physical broadcast channel, a row index pointing into the control resource set zero configuration table;
   means for determining information related to at least one of information of punctured or non-punctured resource blocks, or interleaving information, based on the row index; and
   means for using the determined information to determine the control resource set zero for the narrowband new radio.
2. The apparatus according to aspect 1, further comprising:
   means for aligning a low edge of the control resource set zero in frequency with a low edge of the synchronization signal block.
3. The apparatus according to aspect 1 or 2, wherein the information of punctured resource blocks comprises a puncturing pattern defined by whether resource blocks are punctured from one or two ends of a frequency band, or a number of resource blocks to be punctured.
4. The apparatus according to any of aspects 1 to 3, wherein the information of non-punctured resource blocks is indicated via a number of transmitted resource blocks counted from a lowest resource block or a highest resource block of the control resource set zero.
5. The apparatus according to any of aspect s 1 to 4, wherein the interleaving information indicates interleaved or non-interleaved control channel elements or resource element groups.
6. The apparatus according to any of aspect s 1 to 5, further comprising:
   means for determining whether the apparatus is operating in the narrowband new radio based on at least one of the following:
   a synchronization raster point,
   a number of valid physical broadcast channel resource blocks,
   a subcarrier spacing combination of a synchronization signal block and a physical downlink control channel, or
   a subcarrier offset between the synchronization signal block and a resource on which the control resource set zero is located.
7. The apparatus according to any of aspect s 1 to 6, wherein the control resource set zero configuration table is a configuration table by adding or replacing one or more entries in a configuration table of a legacy scenario.
8. The apparatus according to any of aspects 1 to 6, wherein the control resource set zero configuration table is in addition to a configuration table of a legacy scenario, and wherein the determining to apply the control resource set zero configuration table comprises determining to apply the control resource set zero configuration table instead of the configuration table of the legacy scenario.
9. The apparatus according to any of aspects 1 to 8,
   wherein the control resource set zero configuration table comprises a plurality of entries for narrowband new radio scenarios, and wherein the apparatus further comprises means for determining which entry to use based on the row index.
10. The apparatus according to any of aspects 1 to 9, further comprising:
   means for demodulating the physical broadcast channel according to the puncturing assumption.
11. The apparatus according to any of aspects 1 to 10, further comprising:
   means for performing a physical downlink control channel blind detection on the determined control resource set zero.
12. The apparatus according to any of aspects 1 to 11, further comprising:
   means for determining at least one of the following: a lower edge of a transmitted synchronization signal block, or a higher edge of a transmitted synchronization signal block, or
   means for obtaining a subcarrier spacing and a subcarrier offset from the master information block.
13. The apparatus according to any of aspects 7 to 12, further comprising:
   means for, when entries of the control resource set zero configuration table are considered as valid, implementing a legacy operation comprising a legacy assumption on a physical resource block start, a resource block offset, and a transmission bandwidth; and
   means for, when the entries of the control resource set zero configuration table are considered as invalid, implementing a new control resource set zero reception operation comprising an alignment of a low edge of the control resource set zero in frequency with a low edge of a synchronization signal block.
14. The apparatus according to any of aspects 1 to 13, further comprising:
   means for applying an interleaved or a non-interleaved control channel element to resource element group mapping based on the row index.
15. The apparatus according to any of aspects 1 to 14, wherein the determining a control resource set zero configuration table to be applicable comprises at least one of the following:
   determining an existing control resource set zero configuration table to be applicable when the synchronization signal block has been detected based on an existing synchronization raster point,
   determining a first new control resource set zero configuration table to be applicable when the synchronization signal block has been detected based on a new synchronization raster point not close to a band edge, or
   determining a second new control resource set configuration table to be applicable when the synchronization signal block has been detected based on a new synchronization raster point close to a band edge.
16. The apparatus according to any of aspects 12 to 15, wherein when the subcarrier spacing combination of the synchronization signal block and a physical downlink control channel and/or the subcarrier offset are determined from the received master information block, the determining a control resource set zero configuration table to be applicable comprises:
   determining a control resource set zero configuration table of a plurality of configuration tables to be applicable based on the subcarrier spacing combination and/or the subcarrier offset.
17. The apparatus according to any of aspects 12 to 16, further comprising:
   means for determining a subcarrier offset to be 0 independent of the master information block indicated subcarrier offset; and
   means for determining a resource block offset of the control resource set zero based on the row index.
18. An apparatus, comprising:
   means for transmitting a synchronization signal block on a synchronization raster of a narrowband new radio; and
   means for transmitting a physical broadcast channel according to a puncturing assumption, wherein a row index pointing into a control resource set zero configuration table is carried in a master information block indicated in the physical broadcast channel, and the row index is related to at least one of information of punctured or non-punctured resource blocks, or interleaving information.
19. A method, comprising:
   determining a control resource set zero configuration table to be applicable based on a synchronization raster of a narrowband new radio where a synchronization signal block has been detected;
   receiving a physical broadcast channel according to a puncturing assumption;
   obtaining, from a master information block indicated in the received physical broadcast channel, a row index pointing into the control resource set zero configuration table;
   determining information related to at least one of information of punctured or non-punctured resource blocks, or interleaving information, based on the row index; and
   using the determined information to determine the control resource set zero for the narrowband new radio.
20. A method, comprising:
   transmitting a synchronization signal block on a synchronization raster of a narrowband new radio; and
   transmitting a physical broadcast channel according to a puncturing assumption, wherein a row index pointing into a control resource set zero configuration table is carried in a master information block indicated in the physical broadcast channel, and the row index is related to at least one of information of punctured or non-punctured resource blocks, or interleaving information.
21. A computer readable medium comprising instructions that, when executed by a processor, cause the processor to perform at least a method according to aspcet 19 or aspect 20.

## Claims

1. An apparatus, comprising:
means for determining a control resource set zero configuration table to be applicable based on a synchronization raster of a narrowband radio access technology where a synchronization signal block has been detected;
means for receiving a physical broadcast channel according to a puncturing assumption;
means for obtaining, from a master information block carried by the physical broadcast channel, a row index pointing into the control resource set zero configuration table;
means for determining information related to at least one of information of punctured or non-punctured resource blocks, or interleaving information, based on the row index; and
means for using the determined information to determine the control resource set zero for the narrowband radio access technology.

2. The apparatus according to claim 1,
wherein the narrowband radio access technology is narrowband new radio; and/or
wherein the narrowband radio access technology is configured to operate in a sub-5 MHz bandwidth.

3. The apparatus according to claim 1 or 2, wherein the means for determining a control resource set zero configuration table comprise means for determining a configuration table of a plurality of configuration tables to be applicable.

4. The apparatus according to any of claims 1 to 3,
wherein the information of punctured resource blocks comprises a puncturing pattern defined by whether resource blocks are punctured from one or two ends of a frequency band, or a number of resource blocks to be punctured.

5. The apparatus according to any of claims 1 to 4, wherein the interleaving information indicates interleaved or non-interleaved control channel elements or resource element groups.

6. The apparatus according to any of claims 1 to 5, further comprising:
means for determining whether the apparatus is operating in the narrowband radio access technology based on at least one of the following:
a synchronization raster point,
a number of valid physical broadcast channel resource blocks,
a subcarrier spacing combination of a synchronization signal block and a physical downlink control channel, or
a subcarrier offset between the synchronization signal block and a resource on which the control resource set zero is located.

7. The apparatus according to any of claims 1 to 6, wherein the control resource set zero configuration table is in addition to a configuration table of a legacy scenario, and wherein the determining to apply the control resource set zero configuration table comprises determining to apply the control resource set zero configuration table instead of the configuration table of the legacy scenario.

8. The apparatus according to any of claims 1 to 7,
wherein the control resource set zero configuration table comprises a plurality of entries for narrowband radio access technology scenarios, and wherein the apparatus further comprises means for determining which entry to use based on the row index.

9. The apparatus according to any of claims 1 to 8, further comprising:
means for demodulating the physical broadcast channel according to the puncturing assumption.

10. The apparatus according to any of claims 1 to 9, further comprising:
means for applying an interleaved or a non-interleaved control channel element to resource element group mapping based on the row index.

11. The apparatus according to any of claims 1 to 10, wherein the determining a control resource set zero configuration table to be applicable comprises at least one of the following:
determining an existing control resource set zero configuration table to be applicable when the synchronization signal block has been detected based on an existing synchronization raster point,
determining a first new control resource set zero configuration table to be applicable when the synchronization signal block has been detected based on a new synchronization raster point not close to a band edge, or
determining a second new control resource set configuration table to be applicable when the synchronization signal block has been detected based on a new synchronization raster point close to a band edge.

12. An apparatus, comprising:
means for transmitting a synchronization signal block on a synchronization raster of a narrowband radio access technology; and
means for transmitting a physical broadcast channel according to a puncturing assumption, wherein a row index pointing into a control resource set zero configuration table is carried in a master information block carried by the physical broadcast channel, and the row index is related to at least one of information of punctured or non-punctured resource blocks, or interleaving information.

13. A method, comprising:
determining a control resource set zero configuration table to be applicable based on a synchronization raster of a narrowband radio access technology where a synchronization signal block has been detected;
receiving a physical broadcast channel according to a puncturing assumption;
obtaining, from a master information block carried by the physical broadcast channel, a row index pointing into the control resource set zero configuration table;
determining information related to at least one of information of punctured or non-punctured resource blocks, or interleaving information, based on the row index; and
using the determined information to determine the control resource set zero for the narrowband radio access technology.

14. A method, comprising:
transmitting a synchronization signal block on a synchronization raster of a narrowband radio access technology; and
transmitting a physical broadcast channel according to a puncturing assumption, wherein a row index pointing into a control resource set zero configuration table is carried in a master information block carried by the physical broadcast channel, and the row index is related to at least one of information of punctured or non-punctured resource blocks, or interleaving information.

15. A computer readable medium comprising instructions that, when executed by a processor, cause the processor to perform at least a method according to claim 13 or claim 14.
